# EUROPEAN PATENT SPECIFICATION

(11) **EP 1 677 977 B1**
(45) Date of publication and mention of the grant of the patent: **27.02.2008**
(21) Application number: 04782559.1
(22) Date of filing: 27.08.2004
(51) Int. Cl.: B32B 25/04, B60C 1/00

(54) **MICROLAYERED COMPOSITES AND PROCESSES FOR MAKING THE SAME**
MIKROSCHUTZVERBUNDE UND VERFAHREN ZU IHRER HERSTELLUNG
COMPOSITES A MICROCOUCHES, ET LEURS PROCEDES DE PRODUCTION

(30) Priority: 27.10.2003 US 514697 P
(43) Date of publication of application: 12.07.2006
(60) Divisional application: 08000270.2
(73) Proprietor: ExxonMobil Chemical Patents Inc., Baytown, TX 77520-5200 (US)
(72) Inventor: DIAS, Anthony, Jay, Houston, TX 77062 (US); BRANT, Patrick, Seabrook, TX 77586 (US); TSOU, Andy, Haishung, Houston, TX 77059 (US); ZHAO, Rui, Houston, TX 77059 (US); DUVDEVANI, Ilan, Houston, TX 77098 (US)
(74) Representative: Pols, Ronald Maarten
(86) International application number: PCT/US2004/028105
(87) International publication number: WO 2005/044557

(56) References cited:
- EP-A- 0 857 761
- WO-A-03/011917
- US-A- 4 874 568
- US-A- 4 965 135
- US-A- 6 127 026
- US-A1- 2002 187 289
- US-A1- 2003 031 837
- US-B1- 6 586 354

## Description

### FIELD OF THE INVENTION

The present invention relates to microlayered composites made from blends of elastomeric compositions and high barrier thermoplastic resins for use in air barriers, such as for tire innerliners. The invention also provides for processes to manufacture the microlayered composites such as through the use of microlayer coextrusion.

### BACKGROUND

The coextrusion of sheets and other articles wherein individual layer thicknesses are on the order of microns is known. For example, Schrenk, W.J., Alfrey, T., Jr., Some Physical Properties of Multilayered Films, 9 POLYMER ENGINEERING AND SCIENCE, 393-99 (1969), and U.S. Pat. Nos. 3,557,265, 3,565,985, 3,687,589, 3,759,647, 3,773,882, 3,884,606, 5,094,793, 5,094,788, and 5,389,324 disclose devices and processes to prepare composites using coextruded thermoplastic polymeric materials having substantially uniform layer thicknesses. Microlayer coextrusion is to be distinguished from conventional multilayer coextrusion that typically involves the production of less than about fifteen layers. Such equipment and process have been applied in a variety of areas from adhesives to films. *See, for example,* U.S. Pat. Nos. 3,711,176, 6,379,791, 6,630,239, U.S. Pat. App. 2002/0132925, WO 00/76765 A1, and WO 00/15067 A1. However, such devices and processes have yet been applied to all areas where they may deliver desirable properties for their end use applications.

Other background references include U.S. Patent Nos. 4,874,568, 6,127,026, 6,586,354, U.S. Patent Application Publication Nos. 2002/187289 A1, 2003/031837 A1, WO 03/O11917, and EP 0 857 761 A.

US 6,586,354 B1 discloses breathable multi-microlayer thermoplastic film structures and methods of making the same, e.g. for use in disposable diapers. The film has a degradable polymer layer and a thermoplastic elastomer layer, and optionally contains fillers. The multi-microlayer films may be formed in a co-extrusion process.

EP 0 857 761 A1 discloses a pneumatic tire having an air permeation preventive layer comprising a low permeability thermoplastic elastomer composition comprising a thermoplastic elastomer having a thermoplastic resin composition as a continuous phase and a rubber composition as a dispersed phase. Multi- or micro-layered compositions are not disclosed.

Therefore, the invention fulfills this need by providing microlayered composites made from blends of elastomeric compositions and high barrier thermoplastic resins for use in air barriers. In its various embodiments, the invention provides for at least one of desirable air permeability, thermal stability, ozone and weathering resistance, vibration damping, moisture resistance and/or chemical resistance. The invention also provides for processes to manufacture the microlayered composites made from blends of elastomeric compositions and high barrier thermoplastic resins.

### SUMMARY

In an embodiment, the invention provides for a microlayered composite comprising: (a) an elastomeric composition; and (b) a high barrier thermoplastic resin.

In any of the embodiments described in this section, the microlayered composite may comprise at least 25 layers.

In any of the embodiments described in this section, the microlayered composite may comprise at least 400 layers.

In any of the embodiments described in this section, the microlayered composite may comprise at least 800 layers.

In any of the embodiments described in this section, the microlayered composite may comprise at least 1,600 layers.

In any of the embodiments described in this section, the microlayered composite may comprise at least 3,200 layers.

In any of the embodiments described in this section, the microlayered composite may comprise at least 6,400 layers.

In any of the embodiments described in this section, the microlayered composite may comprise a plurality of layers, wherein the layers have a thickness of from less than 2µ.

In any of the embodiments described in this section, the elastomeric composition comprises units selected from isobutylene, isobutene, 2-methyl-1-butene, 3-methyl-1-butene, 2-methyl-2-butene, 1-butene, 2-butene, methyl vinyl ether, indene, vinyltrimethylsilane, hexene, 4-methyl-1-pentene, isoprene, butadiene, 2,3-dimethyl-1,3-butadiene, myrcene, 6,6-dimethyl-fulvene, hexadiene, cyclopentadiene, piperylene, styrene, chlorostyrene, methoxystyrene, indene and indene derivatives, α-methylstyrene, o-methylstyrene, *m-*methylstyrene, andp-methylstyrene, and *p*-tert-butylstyrene.

In any of the embodiments described in this section, the elastomeric composition may comprise C₄ to C₇ isoolefin derived units.

In any of the embodiments described in this section, the elastomeric composition may comprise halogenated C₄ to C₇ isoolefin derived units.

In any of the embodiments described in this section, the elastomeric composition may comprise alkylstyrene derived units.

In any of the embodiments described in this section, the elastomeric composition may comprise units derived from a terpolymer.

In any of the embodiments described in this section, the elastomeric composition may comprise units derived from an ethylene-propylene rubber.

In any of the embodiments described in this section, the elastomeric composition may comprise units selected from the group consisting of at least one of ethylidene norbornene, 1,4-hexadiene, and dicyclopentadiene.

In any of the embodiments described in this section, the elastomeric composition may further comprise units selected from the group consisting of at least one of natural rubbers, polyisoprene rubber, styrene-butadiene rubber (SBR), polybutadiene rubber, isoprene-butadiene rubber (IBR), styrene-isoprene-butadiene rubber (SIBR), ethylene-propylene rubber, ethylene-propylene-diene rubber (EPDM), maleated EPDM, polysulfide, nitrile rubber, propylene oxide polymers, poly(isobutylene-*co-p*-methylstyrene), halogenated poly(isobutylene-*co-p*-methylstyrene), poly(isobutylene-co-cyclopentadiene), halogenated poly(isobutylene-co-cyclopentadiene), poly(isobutylene-co-isoprene-co-p-methylstyrene), halogenated poly(isobutylene-co-isoprene-co-p-methylstyrene), poly(isobutylene-co-isoprene-co-styrene), halogenated poly(isobutylene-co-isoprene-co-styrene), poly(isobutylene-co-isoprene-co-α-methylstyrene) halogenated poly(isobutylene-co-isoprene-co-α-methylstyrene), and mixtures thereof.

In any of the embodiments described in this section, the high barrier thermoplastic resin may be selected from the group consisting of at least one of polycaprolactam (nylon-6), polylauryllactam (nylon-12), polyhexamethyleneadipamide (nylon-6,6) polyhexamethyleneazelamide (nylon-6,9), polyhexamethylenesebacamide (nylon-6,10), polyhexamethyleneisophthalamide (nylon-6, IP) and the condensation product of 11-amino-undecanoic acid (nylon-11), and mixtures thereof.

In any of the embodiments described in this section, the high barrier thermoplastic resin may be selected from the group consisting of at least one of a polyester, a poly(vinyl alcohol), a poly(vinylene chloride), and a polyamide.

In any of the embodiments described in this section, the high barrier thermoplastic resin's permeability may be below that of the elastomeric composition by a factor of from 3 to 1000.

In any of the embodiments described in this section, the high barrier thermoplastic resin may be selected from the group consisting of at least one of poly(trans-1,4-cyclohexylene), poly(trans-1,4-cyclohexylene succinate), poly (trans-1,4-cyclohexylene adipate), poly(cis-1,4-cyclohexane-di-methylene) oxlate, poly-(cis-1,4-cyclohexane-di-methylene) succinate, polyethyleneterephthalate, polytetramethylene-terephthalate, and polytetramethylene-isophthalate, and mixtures thereof.

In other embodiments, an air barrier may comprise the microlayer composites as described above. The air barrier may be an innerliner, an innertube, or an air sleeve. A tire may comprise the air barrier of any of the previous embodiments.

In yet another embodiment, the invention provides for an air barrier comprising a microlayered composite comprising: (a) an elastomeric composition; and (b) a high barrier thermoplastic resin; wherein the elastomeric composition and the high barrier thermoplastic resin are microlayered coextruded to produce the microlayered composite.

The invention also provides for processes to produce any of the previous embodiments. In a particular embodiment, the invention provides for a process for manufacturing a composite article comprising the steps of: blending an elastomeric composition and a high barrier thermoplastic resin to form a blend; melt-processing the blend; and microlayer coextruding the blend to form the composite article.

### BRIEF DESCRIPTION OF THE FIGURES

Figure 1 is a schematic of a microlayer coextrusion process.

Figure 2 is a representation of a front view of a feedblock.

Figure 3 is a representation of a side view of a feedblock.

### DETAILED DESCRIPTION

Various specific embodiments, versions and examples of the invention will now be described, including exemplary embodiments and definitions that are adopted herein for purposes of understanding the claimed invention. However, for purposes of determining infringement, the scope of the "invention" will refer to the appended claims, including their equivalents, and elements or limitations that are equivalent to those that are recited. Any reference to the "invention" may refer to one or more, but not necessarily all, of the inventions defined by the claims. References to specific "embodiments" are intended to correspond to claims covering those embodiments, but not necessarily to claims that cover more than those embodiments.

The term "phr" is parts per hundred rubber, and is a measure common in the art wherein components of a composition are measured relative to a major elastomer component, based upon 100 parts by weight of the elastomer or elastomers or based upon 100 parts by weight of the elastomer plus the secondary rubber, if included.

As used herein, in reference to Periodic Table "Groups", the new numbering scheme for the Periodic Table Groups are used as in HAWLEY'S CONDENSED CHEMICAL DICTIONARY 852 (13th ed. 1997).

The term "elastomer(s)" or "elastomeric composition (s)" as used herein refers to any polymer or composition of polymers consistent with the ASTM D 1566 definition. The terms may be used interchangeably with the term "rubber", as used herein.

As used herein, the term "alkyl" refers to a paraffinic hydrocarbon group which may be derived from an alkane by dropping one or more hydrogens from the formula, such as, for example, a methyl group (CH₃), or an ethyl group (CH₃CH₂).

As used herein, the term "alkenyl" refers to an unsaturated paraffinic hydrocarbon group which may be derived from an alkane by dropping one or more hydrogens from the formula, such as, for example, an ethenyl group, CH₂=CH, and a propenyl group, or CH₃CH=CH.

As used herein, the term "aryl" refers to a hydrocarbon group that forms a ring structure characteristic of aromatic compounds such as, for example, benzene, naphthalene, phenanthrene, anthracene, and typically possess alternate double bonding ("unsaturation") within its structure. An aryl group is thus a group derived from an aromatic compound by dropping one or more hydrogens from the formula such as, for example, phenyl, or C₆H₅.

By "substituted", it is meant substitution of at least one hydrogen group by at least one substituent selected from, for example, halogen (chlorine, bromine, fluorine, or iodine), amino, nitro, sulfoxy (sulfonate or alkyl sulfonate), thiol, alkylthiol, and hydroxy; alkyl, straight or branched chain having 1 to 20 carbon atoms which includes methyl, ethyl, propyl, tert-butyl, isopropyl, isobutyl, alkoxy, straight or branched chain alkoxy having 1 to 20 carbon atoms, and includes, for example, methoxy, ethoxy, propoxy, isopropoxy, butoxy, isobutoxy, secondary butoxy, tertiary butoxy, pentyloxy, isopentyloxy, hexyloxy, heptryloxy, octyloxy, nonyloxy, and decyloxy; haloalkyl, which means straight or branched chain alkyl having 1 to 20 carbon atoms which is substituted by at least one halogen, and includes, for example, chloromethyl, bromomethyl, fluoromethyl, iodomethyl, 2-chloroethyl, 2-bromoethyl, 2-fluoroethyl, 3-chloropropyl, 3-bromopropyl, 3-fluoropropyl, 4-chlorobutyl, 4-fluorobutyl, dichloromethyl, dibromomethyl, difluoromethyl, diiodomethyl, 2,2-dichloroethyl, 2,2-dibromomethyl, 2,2-difluoroethyl, 3,3-dichloropropyl, 3,3-difluoropropyl, 4,4-dichlorobutyl, 4,4-difluorobutyl, trichloromethyl, 4,4-difluorobutyl, trichloromethyl, trifluoromethyl, 2,2,2-trifluoroethyl, 2,3,3-trifluoropropyl, 1,1,2,2-tetrafluoroethyl, and 2,2,3,3-tetrafluoropropyl. Thus, for example, a "substituted styrenic unit" includes *p*-methylstyrene, *p*-ethylstyrene.

As used herein, molecular weights (number average molecular weight (Mn), weight average molecular weight (Mw), and z-average molecular weight (Mz)) are reported in accordance to Size Exclusion Chromatography using a Waters 150 Gel Permeation Chromatograph equipped with a differential refractive index detector and calibrated using polystyrene standards. Samples are run in tetrahydrofuran (THF) at a temperature of 45°C. Molecular weights are reported in accordance to polystyrene-equivalent molecular weights and are generally measured in g/mol.

As used herein, aromatic content and olefin content are measured by ¹H-NMR as measured directly from the ¹H NMR spectrum from a spectrometer with a field strength greater than 300 MHz, alternatively 400 MHz (frequency equivalent). Aromatic content is the integration of aromatic protons versus the total number of protons. Olefin proton or olefinic proton content is the integration of olefinic protons versus the total number of protons.

As used herein, "microlayered composite" refers to any product made from a plurality of layers, generally more than fifteen layers, that have thicknesses in the order from nanometers to microns.

As used herein, "high barrier thermoplastic resin(s)" refers to thermoplastics whose permeability is below that of the elastomer or elastomeric composition by a factor of from 3 to 1000.

### DETAILED DESCRIPTION

### Elastomer

The elastomeric compositions disclosed herein include at least one elastomer. In certain embodiments, the elastomer comprises C₄ to C₇ isoolefin derived units. These polymers are generally homopolymers or random copolymers of C₄ to C₇ isoolefin derived units. The C₄ to C₇ isoolefin derived units may be selected from isobutylene, isobutene, 2-methyl-1-butene, 3-methyl-1-butene, 2-methyl-2-butene, 1-butene, 2-butene, methyl vinyl ether, indene, vinyltrimethylsilane, hexene, and 4-methyl-1-pentene. Further, the elastomer may also comprise multiolefin derived units selected from isoprene, butadiene, 2,3-dimethyl-1,3-butadiene, myrcene, 6,6-dimethyl-fulvene, hexadiene, cyclopentadiene, and piperylene. The elastomer may also comprise styrenic-derived units selected from styrene and substituted styrenes, non-limiting examples of which include chlorostyrene, methoxystyrene, indene and indene derivatives, α-methylstyrene, *o*-methylstyrene, *m*-methylstyrene, and *p-*methylstyrene, and *p*-tert-butylstyrene. The elastomer may also be halogenated.

The elastomer may also be a butyl-type rubber or branched butyl-type rubber, including halogenated versions of these elastomers. Useful elastomers are unsaturated butyl rubbers such as homopolymers and copolymers of olefins or isoolefins and multiolefins, or homopolymers of multiolefins. These and other types of elastomers suitable for the invention are well known and are described in RUBBER TECHNOLOGY 209-581 (Maurice Morton ed., Chapman & Hall 1995), THE VANDERBILT RUBBER HANDBOOK 105-122 (Robert F. Ohm ed., R.T. Vanderbilt Co., Inc. 1990), and Edward Kresge and H.C. Wang in 8 KIRK-OTHMER ENCYCLOPEDIA OF CHEMICAL TECHNOLOGY 934-955 (John Wiley & Sons, Inc. 4th ed. 1993). Non-limiting examples of unsaturated elastomers useful in the method and composition are poly(isobutylene-co-isoprene), polyisoprene, polybutadiene, poly(styrene-co-butadiene), natural rubber, star-branched butyl rubber, and mixtures thereof. Useful elastomers may be made by any suitable means known in the art, and the invention is not herein limited by the method of producing the elastomer.

Butyl rubbers are prepared by reacting a mixture of monomers, the mixture having at least (1) a C₄ to C₇ isoolefin monomer component such as isobutylene with (2) a multiolefin, monomer component. Typically, the isoolefin is in a range from 70 to 99.5 wt% by weight of the total monomer mixture in one embodiment, and 85 to 99.5 wt% in another embodiment. The multiolefin component is present in the monomer mixture from 30 to 0.5 wt%, alternatively 25 to 0.5 wt%, alternatively 20 to 0.5 wt%, alternatively 15 to 0.5 wt%, alternatively 10 to 0.5 wt% and alternatively 8 to 0.5 wt%.

The isoolefin is a C₄ to C₇ compound, non-limiting examples of which are compounds such as isobutylene, isobutene, 2-methyl-1-butene, 3-methyl-1-butene, 2-methyl-2-butene, 1-butene, 2-butene, methyl vinyl ether, indene, vinyltrimethylsilane, hexene, and 4-methyl-1-pentene. The multiolefin is a C₄ to C₁₄ multiolefin such as isoprene, butadiene, 2,3-dimethyl-1,3-butadiene, myrcene, 6,6-dimethyl-fulvene, hexadiene, cyclopentadiene, and piperylene, and other monomers such as disclosed in EP 0 279 456, U.S. Pat. Nos. 5,506,316 and 5,162,425. Other polymerizable monomers such as styrene and dichlorostyrene are also suitable for homopolymerization or copolymerization in butyl rubbers. One embodiment of the butyl rubber polymer may be obtained by reacting 95 to 99.5 wt% of isobutylene with 0.5 to 8 wt% isoprene, alternatively 0.5 wt% to 5.0 wt% isoprene. Butyl rubbers and methods of their production are described in detail in, for example, U.S. Pat. Nos. 2,356,128, 3,968,076, 4,474,924, 4,068,051 and 5,532,312.

Suitable butyl rubbers are EXXON^{®} BUTYL Grades of poly(isobutylene-co-isoprene), having a Mooney viscosity of 32 ± 2 to 51 ± 5 (ML 1 + 8 at 125°C, ASTM D 1646). Another suitable butyl-type rubber is VISTANEX^{™} polyisobutylene rubber having a molecular weight viscosity average of 0.9 ± 0.15 x 10⁶ to 2.11 ± 0.23 x 10⁶. (ExxonMobil Chemical Co., Baytown, TX).

The butyl rubber may also be a branched or "star-branched" butyl rubber. These rubbers are described in, for example, EP 0 678 529 B1, U.S. Patent Nos. 5,182,333 and 5,071,913. In one embodiment, the star-branched butyl rubber ("SBB") is a composition of a butyl rubber, either halogenated or not, and a polydiene or block copolymer, either halogenated or not. The invention is not limited by the method of forming the SBB. The polydienes/block copolymer, or branching agents (hereinafter "polydienes"), are typically cationically reactive and are present during the polymerization of the butyl or halogenated butyl rubber, br can be blended with the butyl rubber to form the SBB. The branching agent or polydiene can be any suitable branching agent, and the invention is not limited to the type of polydiene used to make the SBB.

The SBB is typically a composition of the butyl or halogenated butyl rubber as described above and a copolymer of a polydiene and a partially hydrogenated polydiene selected from the group including styrene, polybutadiene, polyisoprene, polypiperylene, natural rubber, styrene-butadiene rubber, ethylene-propylene-diene rubber (EPDM), ethylene-propylene rubber (EPR), styrene-butadiene-styrene and styrene-isoprene-styrene block copolymers. These polydienes are present, based on the monomer wt%, greater than 0.3 wt%, alternatively from 0.3 to 3 wt%, and alternatively 0.4 to 2.7 wt%.

One suitable SBB is SB Butyl 4266 (ExxonMobil Chemical Company, Baytown, TX), having a Mooney viscosity (ML 1+8 at 125°C, ASTM D 1646, modified) of 34 to 44. Further, cure characteristics of SB Butyl 4266 are as follows: MH is 69 ± 6 dN·m, ML is 11.5 ± 4.5 dN·m (ASTM D 2084).

The elastomer may also be halogenated. Halogenated butyl rubber is produced by the halogenation of the butyl rubber product described above. Halogenation can be carried out by any means, and the halogenation process does not limit the invention. Methods of halogenating polymers such as butyl polymers are disclosed in U.S. Patent Nos. 2,631,984, 3,099,644, 4,554,326, 4,681,921, 4,650,831, 4,384,072, 4,513,116 and 5,681,901. In one embodiment, the butyl rubber is halogenated in hexane diluent at from 4 to 60°C using bromine (Br₂) or chlorine (Cl₂) as the halogenation agent. The halogenated butyl rubber has a Mooney viscosity of 20 to 70 (ML 1+8 at 125°C), alternatively from 25 to 55. The halogen wt% is from 0.1 to 10 wt% based in on the weight of the halogenated butyl rubber, alternatively 0.5 to 5 wt%, and alternatively 1 to 2.5 wt%.

One suitable halogenated butyl rubber is Bromobutyl 2222 (ExxonMobil Chemical Company), having a Mooney viscosity is from 27 to 37 (ML 1+8 at 125°C, ASTM 1646, modified) and a bromine content from 1.8 to 2.2 wt% relative to the Bromobutyl 2222. Further, cure characteristics of Bromobutyl 2222 are as follows: MH is from 28 to 40 dN·m, ML is from 7 to 18 dN·m (ASTM D 2084). Another suitable halogenated butyl rubber is Bromobutyl 2255 (ExxonMobil Chemical Company), having a Mooney Viscosity is from 41 to 51 (ML 1+8 at 125°C, ASTM D 1646, modified) and a bromine content from 1.8 to 2.2 wt%. Further, cure characteristics of Bromobutyl 2255 are as follows: MH is from 34 to 48 dN·m, ML is from 11 to 21 dN·m (ASTM D 2084).

The elastomer may also be a branched or "star-branched" halogenated butyl rubber. The halogenated star-branched butyl rubber may be a composition of a butyl rubber, either halogenated or not, and a polydiene or block copolymer, either halogenated or not. The halogenation process is described in detail in U.S. Patent Nos. 4,074,035, 5,071,913, 5,286,804, 5,182,333 and 6,228,978. The invention is not limited by the method of forming the halogenated star branched butyl rubber. The polydienes/block copolymer, or branching agents (hereinafter "polydienes"), are typically cationically reactive and are present during the polymerization of the butyl or halogenated butyl rubber, or can be blended with the butyl or halogenated butyl rubber to form the halogenated star branched butyl rubber. The branching agent or polydiene can be any suitable branching agent, and the invention is not limited to the type of polydiene used to make the halogenated star branched butyl rubber.

The halogenated star branched butyl rubber is typically a composition of the butyl or halogenated butyl rubber as described above and a copolymer of a polydiene and a partially hydrogenated polydiene selected from the group including styrene, polybutadiene, polyisoprene, polypiperylene, natural rubber, styrene-butadiene rubber, ethylene-propylene- diene rubber, styrene-butadiene-styrene and styrene-isoprene-styrene block copolymers. These polydienes are present (based on the monomer wt%) in amounts greater than 0.3 wt%, alternatively 0.3 to 3 wt%, and alternatively 0.4 to 2.7 wt%.

A suitable halogenated star branched butyl rubber is Bromobutyl 6222 (ExxonMobil Chemical Company), having a Mooney viscosity (ML 1+8 at 125°C, ASTM D 1646, modified) of 27 to 37 and a bromine content of 2.2 to 2.6 wt% relative to the halogenated star branched butyl rubber. Further, care characteristics of Bromobutyl 6222 are as follows: MH is from 24 to 38 dN·m, ML is from 6 to 16 dN·m (ASTM D 2084).

The elastomer may also comprise styrenic derived units. The elastomer may also be a random copolymer comprising C₄ to C₇ isoolefin derived units, such as isobutylene derived units, and styrenic units selected from styrene and substituted styrenes such as, for example, chlorostyrene, methoxystyrene, indene and indene derivatives, α-methylstyrene, *o*-methylstyrene, *m-*methylstyrene, and *p*-methylstyrene, *p*-halomethylstyrene (also including ortho and meta-halomethylstyrene) and *p*-tert-butylstyrene. In one embodiment, the halomethylstyrene-derived unit is a *p*-halomethylstyrene containing at least 80%, alternatively at least 90% by weight of the para-isomer. The "halo" group can be any halogen, for example, chlorine or bromine. The halogenated elastomer may also include functionalized interpolymers wherein at least some of the alkyl substituents groups present in the styrene monomer units contain benzylic halogen or some other functional group described further below.

Suitable materials may be characterized as terpolymers containing C₄ to C₇ isoolefin derived units and the following monomer units randomly spaced along the polymer chain: 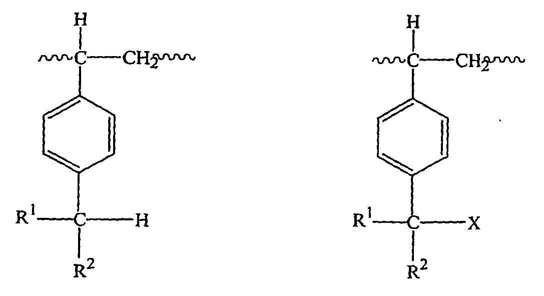 wherein R¹ and R² are independently hydrogen, lower alkyl, for example, C₁ to C₇ alkyl and primary or secondary alkyl halides and X is a functional group such as halogen. For example, R¹ and R² are each hydrogen. Up to 60 mol% of the para-substituted styrene present in the elastomer structure may be the functionalized structure above in one embodiment, and in another embodiment from 0.1 to 5 mol%.

The functional group X may be halogen or a combination of a halogen and some other functional group such which may be incorporated by nucleophilic substitution of benzylic halogen with other groups such as carboxylic acids; carboxy salts; carboxy esters, amides and imides; hydroxy; alkoxide; phenoxide; thiolate; thioether; xanthate; cyanide; nitrile; amino and mixtures thereof. These functionalized isoolefin copolymers, their method of preparation, methods of functionalization, and cure are more particularly disclosed in U.S. Patent No. 5,162,445, and in particular, the functionalized amines as described above.

One suitable elastomer is poly(isobutylene-*co-p*-methylstyrene), or "XP-50" (ExxonMobil Chemical Company). Another suitable elastomer is a terpolymer of isobutylene and *p*-methylstyrene containing from 0.5 to 20 mol% *p-*methylstyrene, wherein up to 60 mol% of the methyl substituent groups present on the benzyl ring contain a bromine or chlorine atom, such as a bromine atom (p-bromomethylstyrene), as well as a combination of *p*-bromomethylstyrene and other functional groups such as ester and ether. These halogenated elastomers are commercially available as EXXPRO^{™} Elastomers (ExxonMobil Chemical Company), and abbreviated as "BIMS". These isoolefin copolymers, their method of preparation and cure are more particularly disclosed in U.S. Pat. No. 5,162,445. These elastomers have a substantially homogeneous compositional distribution such that at least 95% by weight of the polymer has a *p*-alkylstyrene content within 10% of the average *p*-alkylstyrene content of the polymer. Desirable copolymers are also characterized by a molecular weight distribution (Mw/Mn) of between 2 and 20 in one embodiment, and less than 10 in another embodiment, and less than 5 in another embodiment, and less than 2.5 in yet another embodiment, and greater than 2 in yet another embodiment; an exemplary viscosity average molecular weight is in the range of 200,000 up to 2,000,000 and alternatively a number average molecular weight in the range of 25,000 to 750,000 as determined by gel permeation chromatography.

The elastomer may also comprise a composition of one or more of the same elastomer having differing molecular weights to yield a composition having a bimodal molecular weight distribution. This bimodal distribution can be achieved by, for example, having a low molecular weight component in the elastomer. This can be accomplished by physically blending two different Mw polymers together, or by *in situ* reactor blending. In one embodiment, the elastomer has a low molecular weight (weight average molecular weight) component of 5,000 Mw to 80,000 Mw in one embodiment, and from 10,000 Mw to 60,000 Mw in another embodiment; the low molecular weight component comprising from 5 to 40 wt% of the composition in one embodiment, and from 10 to 30 wt% of the composition in another embodiment.

In an embodiment, the functionality is selected such that it can react or form polar bonds with functional groups present in the matrix polymer, for example, acid, amino or hydroxyl functional groups, when the polymer components are mixed at high temperatures.

The XP-50 and BIMS polymers may be prepared by a slurry polymerization of the monomer mixture using a Lewis acid catalyst, followed by halogenation, such as bromination, in solution in the presence of halogen and a radical initiator such as heat and/or light and/or a chemical initiator and, optionally, followed by electrophilic substitution of bromine with a different functional moiety.

BIMS polymers are brominated polymers that generally contain from 0.1 to 5 mole% of bromomethylstyrene groups relative to the total amount of monomer derived units in the polymer, alternatively 0.2 to 3.0 mol%, alternatively 0.3 to 2.8 mol%, alternatively 0.4 to 2.5 mol%, and alternatively 0.3 to 2.0 mol%, wherein a desirable range may be any combination of any upper limit with any lower limit. Expressed another way, copolymers contain from 0.2 to 10 wt% of bromine, based on the weight of the polymer, alternatively 0.4 to 6 wt%, alternatively 0.6 to 5.6 wt% and are substantially free (less than 0.10 wt%) of ring halogen or halogen in the polymer backbone chain. The elastomer may also be a copolymer of C₄ to C₇ isoolefin derived units (or isomonoolefin), *p*-methylstyrene derived units and *p*-halomethylstyrene derived units, wherein the *p-*halomethylstyrene units are present in the interpolymer from 0.4 to 3.0 mol% based on the total number of *p*-methylstyrene, and wherein the para-methylstyrene derived units are present from 3 to 15 wt% based on the total weight of the polymer, alternatively 4 to 10 wt%. In another embodiment, the *p-*halomethylstyrene isp-bromomethylstyrene.

Examples of the elastomer include a copolymer or terpolymer and comprises unit selected from isobutylene, isobutene, 2-methyl-1-butene, 3-methyl-1-butene, 2-methyl-2-butene, 1-butene, 2-butene, methyl vinyl ether, indene, vinyltrimethylsilane, hexene, 4-methyl-1-pentene, isoprene, butadiene, 2,3-dimethyl-1,3-butadiene, myrcene, 6,6-dimethyl-fulvene, hexadiene, cyclopentadiene, piperylene, styrene, chlorostyrene, methoxystyrene, indene and indene derivatives, α-methylstyrene, *o*-methylstyrene, *m*-methylstyrene, and *p-*methylstyrene, and *p*-tert-butylstyrene. The copolymer or terpolymer may also be halogenated.

In other embodiments, the elastomer includes rubbers of ethylene elastomers. For example, ethylene elastomers include rubbers of ethylene and propylene derived units such as EPR and EPDM. Examples of suitable comonomers in making EPDM are ethylidene norbornene, 1,4-hexadiene, dicyclopentadiene, as well as others. These rubbers are described in RUBBER TECHNOLOGY 260-283 (1995). A suitable ethylene-propylene rubber is commercially available as VISTALON^{™} (ExxonMobil Chemical Company, Houston TX). In an embodiment, maleated EPDM is used in the practice of the invention.

### Secondary Rubber Component

A secondary rubber component, sometimes referred to as "general purpose rubbers," and their derived units may be present in the elastomeric compositions, the composite articles, and their end use articles . These rubbers may be blended by any suitable means with the elastomer or elastomeric composition. These rubbers include, but are not limited to, natural rubbers, polyisoprene rubber, poly(styrene-co-butadiene) rubber (SBR), polybutadiene rubber (BR), poly(isoprene-co-butadiene) rubber (IBR), styrene-isoprene-butadiene rubber (SIBR), ethylene-propylene rubber (EPR), ethylene-propylene-diene rubber (EPDM), polysulfide, nitrile rubber, propylene oxide polymers, star-branched butyl rubber and halogenated star-branched butyl rubber, brominated butyl rubber, chlorinated butyl rubber, star-branched polyisobutylene rubber, star-branched brominated butyl (polyisobutylene/isoprene copolymer) rubber; poly(isobutylene-*co*-*p*-methylstyrene) and halogenated poly(isobutylene-*co*-*p-*methylstyrene), such as, for example, terpolymers of isobutylene derived units, *p-*methylstyrene derived units, and *p*-bromomethylstyrene derived units, poly(isobutylene-co-isoprene-co-p-methylstyrene), halogenated poly(isobutylene-co-isoprene-co-p-methylstyrene), poly(isobutylene-co-isoprene-co-styrene), halogenated poly(isobutylene-co-isoprene-co-styrene), poly(isobutylene-co-isoprene-co-α-methylstyrene) halogenated poly(isobutylene-co-isoprene-co-α-methylstyrene), and mixtures thereof.

Natural rubbers are described in detail by *Subramaniam* in RUBBER TECHNOLOGY 179-208 (Maurice Morton, ed., Chapman & Hall 1995). Examples of the natural rubbers include Malaysian rubber such as SMR CV, SMR 5, SMR 10, SMR 20, and SMR 50 and mixtures thereof, wherein the natural rubbers have a Mooney viscosity at 100°C (ML 1+4) of 30 to 120, alternatively from 40 to 65. The Mooney viscosity test referred to herein is in accordance with ASTM D-1646. In an embodiment, the natural rubber is present in the composition from 5 to 40 phr, alternatively 5 to 25 phr, and alternatively 10 to 20 phr, wherein the natural rubber may be any upper phr limit combined with any lower phr limit described herein.

Polybutadiene (BR) rubber is another suitable secondary rubber. The Mooney viscosity of the polybutadiene rubber as measured at 100°C (ML 1+4) may range from 35 to 70, 40 to 65, or 45 to 60. Some commercial examples of useful synthetic rubbers are NATSYN^{™} (Goodyear Chemical Company), and BUDENE^{™} 1207 or BR 1207 (Goodyear Chemical Company). An example is high cis-polybutadiene (cis-BR). By "cis-polybutadiene" or "high cis-polybutadiene", it is meant that 1,4-cis polybutadiene is used, wherein the amount of cis component is at least 95%. An example of high cis-polybutadiene is BUDENE^{™} 1207.

In certain embodiments, rubbers of ethylene and propylene derived units such as EPR and EPDM are also suitable as secondary rubbers. Examples of suitable comonomers in making EPDM are ethylidene norbornene, 1,4-hexadiene, dicyclopentadiene, as well as others. These rubbers are described in RUBBER TECHNOLOGY 260-283 (1995). A suitable ethylene-propylene rubber is commercially available as VISTALON^{®} (ExxonMobil Chemical Company).

The secondary rubber may also be a halogenated rubber as part of the elastomeric composition. The halogenated butyl rubber may be a brominated butyl rubber or a chlorinated butyl rubber. General properties and processing of halogenated butyl rubbers are described in THE VANDERBILT RUBBER HANDBOOK. 105-122 (Robert F. Ohm ed., R.T. Vanderbilt Co., Inc. 1990), and in RUBBER TECHNOLOGY 311-321 (1995). Butyl rubbers, halogenated butyl rubbers, and star-branched butyl rubbers are described by Edward Kresge and H. C. Wang in 8 KIRK-OTHMER ENCYCLOPEDIA OF CHEMICAL TECHNOLOGY 934-955 (John Wiley & Sons, Inc. 4th ed. 1993).

The secondary rubber component may include, but is not limited to, at least one or more of brominated butyl rubber, chlorinated butyl rubber, star-branched polyisobutylene rubber, star-branched brominated butyl (polyisobutylene/isoprene copolymer) rubber; halogenated poly(isobutylene-*co-p-*methylstyrene), such as, for example, terpolymers of isobutylene derived units, *p-*methylstyrene derived units, and *p*-bromomethylstyrene derived units, halomethylated aromatic interpolymers as in U.S. Pat. Nos. 5,162,445; 4,074,035; and 4,395,506; halogenated isoprene and halogenated isobutylene copolymers, polychloroprene, and mixtures of any of the above. Some embodiments of the halogenated rubber component are also described in U.S. Pat. Nos. 4,703,091 and 4,632,963.

### Elastomeric Composition

The elastomeric compositions of the invention may be prepared by using conventional mixing or blending techniques including, for example, kneading, roller milling, extruder mixing, internal mixing (such as with a Banbury^{™} or Brabender^{™} mixer). The sequence of mixing and temperatures employed are well known to the skilled rubber compounder, the objective being the dispersion of fillers, activators and curatives in the polymer matrix without excessive heat buildup. A useful mixing procedure utilizes a Banbury^{™} mixer in which the elastomer, secondary rubber, carbon black, non-black fillers, and plasticizer are added and the composition mixed for the desired time or to a particular temperature to achieve adequate dispersion of the ingredients in the blend. Alternatively, the rubber and a portion of the carbon black (e.g., one-third to two thirds) is mixed for a short time (e.g., about 1 to 3 minutes) followed by the remainder of the carbon black and aid. Mixing is continued for about 1 to 10 minutes at high rotor speed during which time the mixed components reach a temperature of about 140°C. Following cooling, the components are mixed in a second step on a rubber mill or in a Banbury^{™} mixer during which the curing agent and optional accelerators, are thoroughly and uniformly dispersed at relatively low temperature, for example, 80°C to 105°C, to avoid premature curing of the composition. Variations in mixing will be readily apparent to those skilled in the art.

The elastomer may be present in elastomeric compositions from 10 to 100 phr in one embodiment, and from 20 to 80 phr in another embodiment, and from 30 to 70 phr in yet another embodiment, and from 40 to 60 phr in yet another embodiment, wherein a desirable phr range for the elastomer is any upper phr limit combined with any lower phr limit described herein.

The secondary rubber component of the elastomer composition may be present in a range from up to 90 phr in one embodiment, from up to 50 phr in another embodiment, from up to 40 phr in another embodiment, and from up to 30 phr in yet another embodiment. In yet another embodiment, the secondary rubber is present from at least 2 phr, and from at least 5 phr in another embodiment, and from at least 5 phr in yet another embodiment, and from at least 10 phr in yet another embodiment. Other ranges also include any combination of any upper phr limit and any lower phr limit. For example, the secondary rubber, either individually or as a blend of rubbers such as, for example NR, may be present from 5 phr to 40 phr in one embodiment, and from 8 to 30 phr in another embodiment, and from 10 to 25 phr in yet another embodiment, and from 5 to 25 phr in yet another embodiment, and from 5 to 15 phr in yet another embodiment, wherein a desirable range of NR may be any combination of any upper phr limit with any lower phr limit.

### High Barrier Thermoplastic Resins

In certain embodiments, high barrier thermoplastic resins refers to thermoplastics whose permeability is below that of the elastomer or elastomeric composition by a factor of from 3 to 1000. Typical high barrier thermoplastic resins include but are not limited to polyester (such as Mylar, available from Dupont, Hopewell, VA), poly(vinyl alcohol), poly(vinylene chloride) and polyamides (nylons).

Suitable polyamides (nylons) comprise crystalline or resinous, high molecular weight solid polymers including copolymers and terpolymers having recurring amide units within the polymer chain. Polyamides may be prepared by polymerization of one or more epsilon lactams such as caprolactam, pyrrolidione, lauryllactam and aminoundecanoic lactam, or amino acid, or by condensation of dibasic acids and diamines. Both fiber-forming and molding grade nylons are suitable. Examples of such polyamides are polycaprolactam (nylon-6), polylauryllactam (nylon-12), polyhexamethyleneadipamide (nylon-6,6) polyhexamethyleneazelamide (nylon-6,9), polyhexamethylenesebacamide (nylon-6,10), polyhexamethyleneisophthalamide (nylon-6, IP) and the condensation product of 11-amino-undecanoic acid (nylon-11). Additional examples of satisfactory polyamides (especially those having a softening point below 275°C) are described in Kirk-Othmer, 18 ENCYCLOPEDIA OF CHEMICAL TECHNOLOGY 406-435 (1982), 16 ENCYCLOPEDIA OF CHEMICAL TECHNOLOGY 1-105 (1968), CONCISE ENCYCLOPEDIA OF POLYMER SCIENCE AND ENGINEERING 748-761 (1990), and 10 ENCYCLOPEDIA OF POLYMER SCIENCE AND TECHNOLOGY 392-414 (1969) (John Wiley & Sons). Commercially available thermoplastic polyamides may be used in the practice of this invention, with linear crystalline polyamides having a softening point or melting point between 160 and 260°C.

Suitable polyesters include the polymer reaction products of one or a mixture of aliphatic or aromatic polycarboxylic acids esters of anhydrides and one or a mixture of diols. Examples of satisfactory polyesters include poly(trans-1,4-cyclohexylene), C₂₋₆ alkane dicarboxylates such as poly(trans-1,4-cyclohexylene succinate) and poly (trans-1,4-cyclohexylene adipate); poly (cis or trans-1,4-cyclohexanedimethylene) alkanedicarboxylates such as poly(cis-1,4-cyclohexane-di-methylene) oxlate and poly-(cis-1,4-cyclohexane-di-methylene) succinate, poly (C₂₋₄ alkylene terephthalates) such as polyethyleneterephthalate and polytetramethylene- terephthalate, poly (C₂₋₄ alkylene isophthalates such as polyethyleneisophthalate and polytetramethylene-isophthalate and like materials. Polyesters also include those derived from aromatic dicarboxylic acids such as naphthalenic or phthalic acids and C₂ to C₄ diols, such as polyethylene terephthalate and polybutylene terephthalate. In certain embodiments, polyesters will have a melting point in the range of 160°C to 260°C.

The high barrier thermoplastic resins suitable for practice of the present invention may be used singly or in combination. The resins are present in the blends from 30 to 90 wt% of the blends in one embodiment, and from 40 to 80 wt% in another embodiment, and from 50 to 70 wt% in yet another embodiment. In yet another embodiment, the resin is present at a level of greater than 40 wt% of the blends, and greater than 60 wt% in another embodiment.

### Processing Aid

A processing aid may be used in the practice of the present invention. The processing aid may be selected from paraffinic oils, aromatic oils, naphthenic oils, and polybutenes. In one embodiment, the polybutene processing aid is a low molecular weight (less than 15,000 Mn) homopolymer or copolymer of olefin derived units having from 3 to 8 carbon atoms, alternatively 4 to 6 carbon atoms. In yet another embodiment, the polybutene is a homopolymer or copolymer of a C₄ raffinate. An embodiment of such low molecular weight polymers termed "polybutene" polymers is described in, for example, SYNTHETIC LUBRICANTS AND HIGH PERFORMANCE FUNCTIONAL FLUIDS 357-392 (Leslie R. Rudnick & Ronald L. Shubkin, ed., Marcel Dekker 1999) (hereinafter "polybutene processing aid" or "polybutene").

The polybutene processing aid may be a copolymer of isobutylene-derived units, 1-butene derived units, and 2-butene derived units. The polybutene may also be; a homopolymer, copolymer, or terpolymer of the three units, wherein the isobutylene derived units are from 40 to 100 wt% of the copolymer, the 1-butene derived units are from 0 to 40 wt% of the copolymer, and the 2-butene derived units are from 0 to 40 wt% of the copolymer. In another embodiment, the polybutene is a copolymer or terpolymer of the three units, wherein the isobutylene derived units are from 40 to 99 wt% of the copolymer, the 1-butene derived units are from 2 to 40 wt% of the copolymer, and the 2-butene derived units are from 0 to 30 wt% of the copolymer. In yet another embodiment, the polybutene is a terpolymer of the three units, wherein the isobutylene derived units are from 40 to 96 wt% of the copolymer, the 1-butene derived units are from 2 to 40 wt% of the copolymer, and the 2-butene derived units are from 2 to 20 wt% of the copolymer. In yet another embodiment, the polybutene is a homopolymer or copolymer of isobutylene and 1-butene, wherein the isobutylene derived units are from 65 to 100 wt% of the homopolymer or copolymer, and the 1-butene derived units are from 0 to 35 wt% of the copolymer.

Polybutene processing aids typically have a number average molecular weight (Mn) of less than 15,000, alternatively less than 14000, alternatively less than 13000, alternatively less than 12000, alternatively less than 11000, alternatively less than 10,000, alternatively less than 9000, alternatively less than 8000, alternatively less than 7000, alternatively less than 6000, alternatively less than 5000, alternatively less than 4000, alternatively less than 3000, and alternatively less than 2000. In one embodiment, the polybutene aid has a number average molecular weight of greater than 400, alternatively greater than 500, alternatively greater than 600, alternatively greater than 700, alternatively greater than 800, and alternatively greater than 900. Embodiments may be combinations of any lower molecular weight limit with any upper molecular weight limit herein. For example, in one non-limiting embodiment of the polybutene, the polybutene has a number average molecular weight of 400 to 10,000, and from 700 to 8000 in another embodiment, and from 900 to 3000 in yet another embodiment. In some embodiments, useful viscosities of the polybutene processing aid are greater than greater than 35 cSt at 100°C, alternatively greater than 100 cSt at 100°C, such as 10 to 6000 cSt (centiStokes) at 100°C, and alternatively 35 to 5000 cSt at 100°C.

Commercial examples of such processing aids are the PARAPOI^{™} series of processing aids (ExxonMobil Chemical Company, Houston TX), such as PARAPOL^{™} 450, 700, 950, 1300, 2400, and 2500. The PARAPOL^{™} series of polybutene processing aids are typically synthetic liquid polybutenes, each individual formulation having a certain molecular weight, all formulations of which can be used in the composition. The molecular weights of the PARAPOL^{™} aids are from 420 Mn (PARAPOL^{™} 450) to 2700 Mn (PARAPOL^{™} 2500). The MWD of the PARAPOL^{™} aids range from 1.8 to 3, alternatively 2 to 2.8. The density (g/ml) of PARAPOL^{™} processing aids varies from about 0.85 (PARAPOL^{™} 450) to 0.91 (PARAPOL^{™} 2500). The bromine number (CG/G) for PARAPOL^{™} aids ranges from 40 for the 450 Mn processing aid, to 8 for the 2700 Mn processing aid.

Another suitable series of processing aids are the TPC^{™} series of processing aids, which are commercially available from Texas Petrochemicals, LP in Houston, TX. Suitable examples include TPC^{™} 150, 175, 1105, 1160 and 1285. The TPC^{™} series of polybutene processing aids are typically synthetic liquid polybutenes, each individual formulation having a certain molecular weight, all formulations of which can be used in the composition.

Below, Table 1 shows some of the properties of the TPC^{™} aids described herein, wherein the viscosity was determined as per ASTM D445.

**Table 1. Properties of individual TPC^{™} Grades**

| **Grade** | **Mn** | **Viscosity @ 100°C, cSt** |
|---|---|---|
| 150 | 500 | 13 |
| 175 | 750 | 85 |
| 1105 | 1000 | 220 |
| 1160 | 1600 | 662 |
| 1285 | 2900 | 3250 |

The elastomeric composition may include one or more types of polybutene as a mixture, blended either prior to addition to the elastomer or with the elastomer. The amount and identity (e.g., viscosity, Mn, .) of the polybutene processing aid mixture can be varied in this manner. Thus, TPC^{™} 150 can be used when low viscosity is desired in the composition, while TPC^{™} 1285 can be used when a higher viscosity is desired, or compositions thereof to achieve some other viscosity or molecular weight. In this manner, the physical properties of the composition can be controlled. As used herein process aid make include a single aid or a composition of two or more aids used to obtain any viscosity or molecular weight (or other property) desired, as specified in the ranges disclosed herein.

Other suitable processing aids include the SUNDEX^{™} series of aids available from Sunoco, Inc., particularly SUNDEX^{™} 750T, 790, 790T, 8125, and 8600T and the CALSOL^{™} series of aids available from R.E. Carroll, particularly CALSOL^{™} 510, 5120, 5550, 804, 806, and 810. Properties of these aids can be found in THE BLUE BOOK: MATERIALS, COMPOUNDING INGREDIENTS, MACHINERY AND SERVICES FOR RUBBER (published by Rubber World magazine, a Lippincott & Peto publication, 1867 West Market St., Akron, Ohio).

The processing aid or aids are generally present in the elastomeric composition from 1 to 60 phr, alternatively from 2 to 40 phr, alternatively from 4 to 35 phr, alternatively from 5 to 30 phr, alternatively from 5 to 25 phr, alternatively 5 to 15, alternatively 6 to 14, alternatively 8 to 14, alternatively from 2 to 20 phr, alternatively from 2 to 10 phr, wherein a range of processing aid may be any upper phr limit combined with any lower phr limit described herein.

### Additives

The elastomeric composition may also have one or more filler components such as, for example, calcium carbonate, silica, clay and other silicates which may or may not be exfoliated, talc, titanium dioxide, and carbon black. In one embodiment, the filler is carbon black or modified carbon black, and combinations thereof. The filler may also be a blend of carbon black and silica. An exemplary filler for such articles as tire treads and sidewalls is reinforcing grade carbon black present from 10 to 100 phr, alternatively 20 to 90 phr, alternatively 30 to 80 phr, alternatively 40 to 80 phr, and alternatively 50 to 80 phr, wherein a range of carbon black may be any upper phr limit combined with any lower phr limit described herein. Useful grades of carbon black, as described in RUBBER TECHNOLOGY, 59-85, range from N110 to N990. More desirably, embodiments of the carbon black useful in, for example, tire treads are ' N229, N351, N339, N220, N234 and N110 provided in ASTM (D3037, D1510, and D3765). Embodiments of the carbon black useful in, for example, sidewalls in tires, are N330, N351, N550, N650, N660, and N762. Carbon blacks suitable for innerliners and other air barriers include N550, N660, N650, N762, N990 and Regal 85.

When clay is present as a filler, it may be a swellable clay in one embodiment, which may or may not be exfoliated or partially exfoliated using an exfoliating agent. Suitable swellable clay materials include natural or synthetic phyllosilicates, particularly smectic clays such as montmorillonite, nontronite, beidellite, volkonskoite, laponite, hectorite, saponite, sauconite, magadite, kenyaite, stevensite, as well as vermiculite, halloysite, aluminate oxides, hydrotalcite. These swellable clays generally comprise particles containing a plurality of silicate platelets having a thickness of 8-12 Å, and contain exchangeable cations such as Na⁺, Ca⁺², K⁺ or Mg⁺² present at the interlayer surfaces. They may also be surface treated (or modified) with intercalant surfactants or materials such as alkyl, ammonium salts.

The swellable clay may be exfoliated by treatment with organic molecules (swelling or exfoliating "agents" or "additives") capable of undergoing ion exchange reactions with the cations present at the interlayer surfaces of the layered silicate. Suitable exfoliating agents include cationic surfactants such as ammonium, alkylamines or alkylammonium (primary, secondary, tertiary and quaternary), phosphonium or sulfonium derivatives of aliphatic, aromatic or arylaliphatic amines, phosphines and sulfides. Desirable amine compounds (or the corresponding ammonium ion) are those with the structure R²R³R⁴N, wherein R², R³, and R⁴ are C₁ to C₃₀ alkyls or alkenes in one embodiment, C₁ to C₂₀ alkyls or alkenes in another embodiment, which may be the same or different. In one embodiment, the exfoliating agent is a so called long chain tertiary amine, wherein at least R² is a C₁₄ to C₂₀ alkyl or alkene.

The fillers may be any size and typically range, for example, from about 0.0001 µm to about 100 µm. As used herein, silica is meant to refer to any type or particle size silica or another silicic acid derivative, or silicic acid, processed by solution, pyrogenic or the like methods and having a surface area, including untreated, precipitated silica, crystalline silica, colloidal silica, aluminum or calcium silicates, fumed silica, and the like.

In some embodiments, one or more crosslinking agents are used in the elastomeric compositions, especially when silica is the primary filler, or is present in combination with another filler. Alternatively, the coupling agent may be a bifunctional organosilane crosslinking agent. An "organosilane crosslinking agent" is any silane coupled filler and/or crosslinking activator and/or silane reinforcing agent known to those skilled in the art including, but not limited to, vinyl triethoxysilane, vinyl-tris-(beta-methoxyethoxy)silane, methacryloylpropyltrimethoxysilane, gamma-amino-propyl triethoxysilane (sold commercially as A1100 by Witco), gamma-mercaptopropyltrimethoxysilane (A189 by Witco) and the like, and mixtures thereof. In one embodiment, bis-(3-triethoxysilypropyl) tetrasulfide (sold commercially as Si69 by Degussa) is employed.

Other additives may also be present in the composition. Other additives include, but are not limited to, plasticizers, tackifiers, extenders, chemical conditioners, homogenizing agents and peptizers such as mercaptans, waxes, resins, rosins, and the like.

The compositions typically contain other components and additives customarily used in rubber mixes, such as effective amounts of other nondiscolored and nondiscoloring processing aids, pigments, accelerators, crosslinking and curing materials, antioxidants, antiozonants. General classes of accelerators include amines, diamines, guanidines, thioureas, thiazoles, thiurams, sulfenamides, sulfenimides, thiocarbamates, xanthates, and the like. Crosslinking and curing agents include sulfur, zinc oxide, and fatty acids. Peroxide cure systems may also be used. The components, and other curatives, are typically present from 0.1 to 10 phr in the composition.

Generally, polymer blends, for example, those used to produce tires, are crosslinked. It is known that the physical properties, performance characteristics, and durability of vulcanized rubber compounds are directly related to the number (crosslink density) and type of crosslinks formed during the vulcanization reaction. (*See, e.g.,* Helt et al., The Post Vulcanization Stabilization for NR in RUBBER WORLD, 18-23 (1991)). Generally, polymer blends may be crosslinked by adding curative molecules, for example sulfur, metal oxides, organometallic compounds, radical initiators, followed by heating. In particular, the following metal oxides are common useful curatives: ZnO, CaO, MgO, Al₂O₃, CrO₃, FeO, Fe₂O₃, and NiO. These metal oxides can be used alone or in conjunction with the corresponding metal fatty acid complex (e.g., zinc stearate, calcium stearate.), or with the organic and fatty acids added alone, such as stearic acid, and optionally other curatives such as sulfur or a sulfur compound, an alkylperoxide compound, diamines or derivatives thereof (*e.g.,* DIAK products sold by DuPont). (See also, Formulation Design and Curing Characteristics of NBR Mixes for Seals, RUBBER WORLD 25-30 (1993)). This method of curing elastomers may be accelerated and is often used for the vulcanization of elastomer blends.

The acceleration of the cure process may be accomplished by adding to the composition an amount of an accelerant, often an organic compound. The mechanism for accelerated vulcanization of natural rubber involves complex interactions between the curative, accelerator, activators and polymers. Ideally, all the available curative is consumed in the formation of effective crosslinks that join together two polymer chains and enhance the overall strength of the polymer matrix. Numerous accelerators are known in the art and include, but are not limited to, the following: stearic acid, diphenyl guanidine (DPG), tetramethylthiuram disulfide (TMTD), 4,4'-dithiodimorpholine (DTDM), tetrabutylthiuram disulfide (TBTD), benzothiazyl disulfide (MBTS), hexamethylene-1,6-bisthiosulfate disodium salt dihydrate (sold commercially as DURALINK^{™} HTS by Flexsys), 2-(morpholinothio) benzothiazole (MBS or MOR), blends of 90% MOR and 10% MBTS (MOR 90), N-tertiarybutyl-2-benzothiazole sulfenamide (TBBS), and N-oxydiethylene thiocarbamyl-N-oxydiethylene sulfonamide (OTOS), zinc 2-ethyl hexanoate (ZEH), and "thioureas".

The materials are mixed by conventional means known to those skilled in the art, in a single step or in stages. In one embodiment, the carbon black is added in a different stage from zinc oxide and other cure activators and accelerators. In another embodiment, antioxidants, antiozonants and processing materials are added in a stage after the carbon black has been processed with the elastomeric composition, and zinc oxide is added at a final stage to maximize compound modulus. In an embodiment, a two to three (or more) stage processing sequence is employed. Additional stages may involve incremental additions of filler and processing aids.

The compositions may be vulcanized by subjecting them using heat or radiation according to any conventional vulcanization process. Typically, the vulcanization is conducted at a temperature ranging from 100°C to 250°C in one embodiment, from 150°C to 200°C in another embodiment, for about 1 to 150 minutes.

### Microlayered Composite

The microlayered composites and articles of the present invention may be manufactured by any means known in the art such as lamination, coating, bonding, adhesion, and coextrusion.

For example, the microlayered composites and articles may be manufactured using coextrusion. Such methods and devices are known in the art. For example, Schrenk, W.J., Alfrey, T., Jr., Some Physical Properties of Multilayered Films, 9 POLYMER ENGINEERING AND SCIENCE, 393-99 (1969), and U.S. Pat. Nos. 3,557,265, 3,565,985, 3,687,589, 3,759,647, 3,773,882, 3,884,606, 4,965,135, 5,094,793, 5,094,788, and 5,389,324 disclose devices and processes suitable to prepare coextruded multilayered composites and microlayered composites. *See also for general principles,* U.S. Pat. Nos. 3,711,176, 6,379,791, 6,630,239, U.S. Pat. App. 2002/0132925, WO 00/76765, and WO 00/15067 A1.

In an embodiment, various molten streams are transported to an extrusion die outlet and joined together in proximity of the outlet. In an embodiment, a multiplication die is employed such as the multiplication die designed by Schrenk and Alfrey. The precise extruder will vary depending on the end use application and its selection is apparent to one skilled in the art: A number of useful extruders are known and include single and twin screw extruders, batch-off extruders. Conventional extruders are commercially available from a variety of vendors such as from Berlyn Extruders (Worcester, Mass.), Bonnot Manufacturing (Uniontown, Ohio), Killion Extruders (Cedar Grove, N.J.) and Leistritz Corp. (Sommerville, N.J.). However, a process that produces composites having multiple stratified layers with hundreds and sometimes thousands of alternating layers in certain embodiments is useful. In some embodiments, the layers may have a thickness from a few microns, such as 3µ, 4µ, or 5µ, to less than 1µ. In other embodiments, the microlayered composite may have a plurality of layers of from 15nm to 2µ, alternatively from 10nm to 2µ, and alternatively from 1nm to 2µ. The layer thicknesses may either be uniform or variable in thickness depending on the desired properties for end use applications.

The microlayered composites and articles of the present invention may comprise a plurality of layers. The layers may comprise a single material or blends of materials as well as multiple layers of different materials in any single layer. The layers may also comprise different materials in the overall form of the microlayered composite and the article.

For example, in certain embodiments, the microlayered composites and articles may comprise repeating layers of an AB structure. In another example, the microlayered composites and articles may comprise repeating layers of an ABC structure. In other examples, the microlayered composites and articles may comprise repeating unit patterns such as ABCABC or ABCBABCB.

In yet other examples, the microlayered composites and articles may comprise an (AB)ₙ form wherein n is an integer of from 50 to 50,000 , with either A and/or B layers as the outermost layers (e.g., (AB)ₙA, (BA)ₙB, or (AB)ₙ), including but not limited to A(BA)ₙBA and ACBC(ACBC)ₙA.

The composition of the microlayered composite may contain A, B, C or more layers in any proportion as dictated by their desired application. For example, for use within tire innerliner applications where the materials have low modulus and high elasticity, from about 1 * 10⁶ Pa at 50% strain to about 1*10⁵ Pa at 50% strain is suitable. The compositions that deliver a low modulus and high elasticity will be easily recognized by those skilled in the art to contain low volume fractions of the high barrier thermoplastic. Another example may contain less than 20% of the high barrier thermoplastic phase. Other examples include compositions containing less than about 10% of the high barrier thermoplastic phase. And yet other examples include those containing about 5% of the high barrier thermoplastic phase.

An additional consideration for a microlayered composite used within a tire innerliner is the order of the individual layers. In an embodiment, the layer structure should be such that the outermost layer has the greatest interaction with the inside of the tire. In general, this will mean that the outermost layer in the composite will be the elastomer phase or an additional optional bonding phase. For example, an outer-most elastomer phase will be a composition comprising a halogenated poly(isobutylene-co-isoprene) or a brominated poly(isobutylene-co-4-methylstyrene).

### Industrial Application

The microlayered composites and articles of the present invention find utility in a variety of air barrier applications such as, in one embodiment, the article is selected from innerliners, innertubes, and air sleeves. Other useful items include but are not limited to hoses, seals, mounts, molded goods, gaskets, ring structures, cable housing, and other articles disclosed in THE VANDERBILT RUBBER HANDBOOK 637-772 (R.T. Vanderbilt Company, Inc. 1990).

### PROPHETIC Example

### Prophetic Example to Prepare Microlayered Composites Having Parallel Layers

To make samples with a feedblock that produces a structure with 24 alternating layers of elastomer and high barrier thermoplastic resin the following procedure may be performed. The primary coextrusion line may consist of a 30 mm diameter, 24:1 length-to-diameter ratio (L/D) single screw extruder for the elastomer and a 19 mm diameter, 24:1 L/D single screw extruder for the high barrier thermoplastic resin. These extruders may be attached to a feedblock that is designed to produce the desired microlayer structure consisting of a 10% high barrier thermoplastic resin and 90% elastomer layer. For a typical run, the coextrusion line will proceed for a specified time, such as a minimum of thirty minutes, to ensure that steady-state conditions have been reached. A normal extrusion rate is approximately 3 kg/hr. The coextruded structures may be extruded at approximately 200°C.

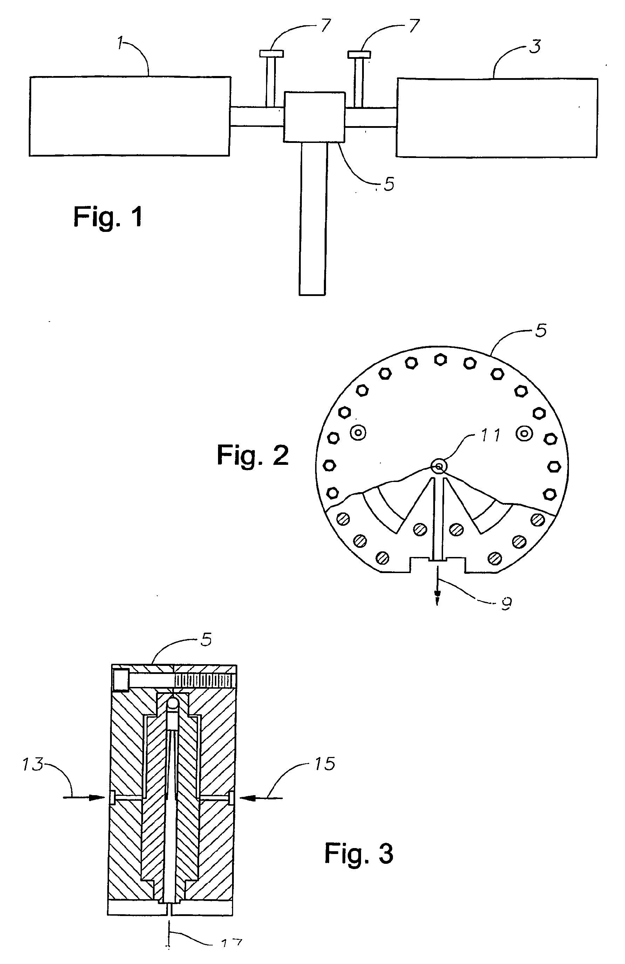

A schematic diagram of an arrangement of a feedblock and extruders is provided in Figure 1. In particular, Figure 1 shows a first extruder 1 and a second extruder 3 with a feedblock 5 along with variable depth thermocouples 7. By increasing the number of layers, the impact of imperfections in each layer of the two-layered structure will be minimized.

Additionally, increasing the number of layers to 256 greatly enhances the overall balance of mechanical and barrier properties. It may be achieved by designing a feedblock that can produce coextruded structures with 256 alternating layers. A schematic diagram of the style of feedblock used to produce this structure is provided in Figures 2 and 3. In particular, Figure 2 shows a front view of a feedblock 5 with an inflow 11 and outflow 9. Figure 3 shows a side view of a feedblock 5 with a first inflow 13 and a second inflow 15 along with an outflow 17. All layers are fairly uniform and parallel.

One important observation of the 256-layer structure is that some layer defects are introduced due to thinning of the layers but the overall contribution of an individual layer to permance is greatly minimized. Structures with greater than 4,096 alternating layers may be produced by similar methodology and equipment.

The table below illustrates particular combinations of elastomeric compositions and high barrier thermoplastic resins along with their barrier performance. Such combinations would be suitable in the practice of the invention. Other combinations are also suitable and apparent to one skilled in the art.

**Table 2. Barrier Performance**

| | 10 Vol% Barrier Microlayer | 5 Vol% Barrier Microlayer |
|---|---|---|
| | *10^8 [cm^3][cm]/[cm^2][s][atm] | *10^8 [cm^3][cm]/[cm^2][s][atm] |
| Butyl Rubber/Nylon | 0.39 | 0.56 |
| Butyl Rubber/Mylar | 0.39 | 0.56 |
| Butyl Rubber/PVOH | 0.13 | 0.23 |
| Butyl Rubber/PVC12 | 0.07 | 0.12 |
| | | |
| EPDM/Nylon | 0.57 | 1.09 |
| EPDM/Mylar | 0.57 | 1.09 |
| EPDM/PVOH | 0.15 | 0.29 |
| EPDM/PVC12 | 0.07 | 0.14 |
| | | |
| SBR*/Nylon | 0.53 | 0.52 |
| SBR/Mylar | 0.53 | 0.52 |
| SBR/PVOH | 0.14 | 0.14 |
| SBR/PVCl2 | 0.07 | 0.07 |
| | | |
| NR**/Nylon | 0.58 | 1.13 |
| NR/Mylar | 0.58 | 1.13 |
| NR/PVOH | 0.15 | 0.30 |
| NR/PVC12 | 0.07 | 0.14 |
| | | |
| BR***/Nylon | 0.58 | 1.11 |
| BR/Mylar | 0.58 | 1.11 |
| BR/PVOH | 0.15 | 0.29 |
| BR/PVC12 | 0.07 | 0.14 |

| | | |
|---|---|---|
| *SBR(styrene butadiene rubber), **NR(natural rubber), ***BR(polybutadiene rubber) | | |

When numerical lower limits and numerical upper limits are listed herein, ranges from any lower limit to any upper limit are contemplated.

## Claims

1. A microlayered composite comprising:
(a) an elastomeric composition comprising C₄ to C₇ isoolefin derived units; and
(b) a high barrier thermoplastic resin selected from the group consisting of at least one of a polyester, a poly(vinyl alcohol), a poly(vinylene chloride), and a polyamide.

2. The microlayered composite of claim 1, wherein the microlayered composite comprises at least 1,600 layers.

3. The microlayered composite of claim 1, wherein the microlayered composite comprises a plurality of layers, wherein the layers have a thickness of from less than 2µ.

4. The microlayered composite of claim 1, wherein the elastomeric composition comprises units selected from isobutylene, isobutene, 2-methyl-1-butene, 3-methyl-1-butene, 2-methyl-2-butene, 1-butene, 2-butene, methyl vinyl ether, indene, vinyltrimethylsilane, hexene, 4-methyl-1-pentene, isoprene, butadiene, 2,3-dimethyl-1,3-butadiene, myrcene, 6,6-dimethyl-fulvene, hexadiene, cyclopentadiene, piperylene, styrene, chlorostyrene, methoxystyrene, indene and indene derivatives, α-methylstyrene, *o*-methylstyrene, *m*-methylstyrene, and *p*-methylstyrene, and *p*-tert-butylstyrene.

5. The microlayered composite of claim 1, wherein the elastomeric composition comprises halogenated C₄ to C₇ isoolefin derived units.

6. The microlayered composite of claim 1, wherein the elastomeric composition comprises alkylstyrene derived units.

7. The microlayered composite of claim 1, wherein the elastomeric composition comprises units derived from a terpolymer.

8. The microlayered composite of claim 1, wherein the elastomeric composition comprises units derived from an ethylene-propylene rubber.

9. The microlayered composite of claim 1, wherein the elastomeric composition comprises units selected from the group consisting of at least one of ethylidene norbornene, 1,4-hexadiene, and dicyclopentadiene.

10. The microlayered composite of claim 1, wherein the elastomeric composition further comprises units selected from the group consisting of at least one of natural rubbers, polyisoprene rubber, styrene-butadiene rubber (SBR), polybutadiene rubber, isoprene-butadiene rubber (IBR), styrene-isoprene-butadiene rubber (SIBR), ethylene-propylene rubber, ethylene-propylene-diene rubber (EPDM), maleated EPDM, polysulfide, nitrile rubber, propylene oxide polymers, poly(isobutylene-*co-p-*methylstyrene), halogenated poly(isobutylene-*co-p*-methylstyrene), poly(isobutylene-co-cyclopentadiene), halogenated poly(isobutylene-*co-*cyclopentadiene), poly(isobutylene-co-isoprene-co-p-methylstyrene), halogenated poly(isobutylene-co-isoprene-co-p-methylstyrene), poly (isobutylene-co-isoprene-co-styrene), halogenated poly(isobutylene-co-isoprene-co-styrene), poly (isobutylene-co-isoprene-co-α-methylstyrene) halogenated poly(isobutylene-co-isoprene-co-α-methylstyrene), and mixtures thereof.

11. The microlayered composite of claim 1, wherein the high barrier thermoplastic resin is selected from the group consisting of at least one of polycaprolactam (nylon-6), polylauryllactam (nylon-12), polyhexamethyleneadipamide (nylon-6,6) polyhexamethyleneazelamide (nylon-6,9), polyhexamethylenesebacamide (nylon-6,10), polyhexamethyleneisophthalamide (nylon-6, IP) and the condensation product of 11-amino-undecanoic acid (nylon-11), and mixtures thereof.

12. The microlayered composite of claim 1, wherein the elastomeric composition comprises a processing aid selected from at least one of paraffinic oils, aromatic oils, naphthenic oils, and polybutenes.

13. The microlayered composite of claim 12, wherein the elastomeric composition comprises 2-20 phr of the processing aid.

14. The microlayered composite of claim 13, wherein the elastomeric composition comprises 5-15 phr of the processing aid.

15. The microlayered composite of claim 1, wherein the elastomeric composition comprises a filler selected from the group consisting of at least one of carbon black, modified carbon black, silicates, exfoliated clay, partially exfoliated clay, modified exfoliated clay, modified partially exfoliated clay, and mixtures thereof.

16. The microlayered composite of claim 1, wherein the elastomeric composition comprises a curing agent selected from the group consisting of at least one of sulfur, sulfur-based compounds, metal oxides, metal oxide complexes, fatty acids, peroxides, diamines, and mixtures thereof.

17. The microlayered composite of claim 1, wherein the high barrier thermoplastic resin is selected from the group consisting of at least one of poly(trans-1,4-cyclohexylene), poly(trans-1,4-cyclohexylene succinate), poly (trans-1,4-cyclohexylene adipate), poly(cis-1,4-cyclohexane-dimethylene) oxalate, poly-(cis-1,4-cyclohexane-di-methylene) succinate, polyethyleneterephthalate, polytetramethylene-terephthalate, and polytetramethylene-isophthalate, and mixtures thereof.

18. An air barrier comprising a microlayered composite according to any of the preceding claims, wherein the elastomeric composition and the high barrier thermoplastic resin are microlayered coextruded to produce the microlayered composite.

19. A process for manufacturing a composite article from a microlayered composite comprising the steps of:
blending an elastomeric composition comprising C₄ to C₇ isoolefin derived units and a high barrier thermoplastic resin selected from the group consisting of at least one of a polyester, a poly(vinyl alcohol), a poly(vinylene chloride), and a polyamide to form a blend;
melt-processing the blend; and
microlayer coextruding the blend to form the composite article.

20. The process of claim 19 further comprising curing the blend.

21. The process of claim 20, wherein curing comprises applying a curing agent selected from the group consisting of at least one of sulfur, sulfur-based compounds, metal oxides, metal oxide complexes, fatty acids, peroxides, diamines, and mixtures thereof.

22. The process of claim 19, wherein the high barrier thermoplastic resin is selected from the group consisting of at least one of poly(trans-1,4-cyclohexylene), poly(trans-1,4-cyclohexylene succinate), poly (trans-1,4-cyclohexylene adipate), poly(cis-1,4-cyclohexane-di-methylene) oxalate, poly-(cis-1,4-cyclohexane-di-methylene) succinate, polyethyleneterephthalate, polytetramethylene-terephthalate, and polytetramethylene-isophthalate, and mixtures thereof.

23. A tire comprising an air barrier comprising a microlayered composite according to any one of claims 1 to 17.

## Patentansprüche

1. Mikroschichtverbund, der
(a) eine elastische Zusammensetzung, die von C₄- bis C₇-Isoolefin abgeleitete Einheiten enthält, und
(b) ein thermoplastisches Harz mit hoher Barrierewirkung ausgewählt aus der Gruppe bestehend aus mindestens einem von Polyester, Poly(vinylalkohol), Poly(vinylenchlorid) und Polyamid enthält.

2. Mikroschichtverbund nach Anspruch 1, der mindestens 1600 Schichten enthält.

3. Mikroschichtverbund nach Anspruch 1, der mehrere Schichten enthält, wobei die Schichten eine Dicke von weniger als 2 µm aufweisen.

4. Mikroschichtverbund nach Anspruch 1, bei der die elastomere Zusammensetzung Einheiten ausgewählt aus Isobutylen, Isobuten, 2-Methyl-1-buten, 3-Methyl-1-buten, 2-Methyl-2-buten, 1-Buten, 2-Buten, Methylvinylether, Inden, Vinyltrimethylsilan, Hexen, 4-Methyl-l-penten, Isopren, Butadien, 2,3-Dimethyl-1,3-butadien, Myrcen, 6,6-Dimethylfulven, Hexadien, Cyclopentadien, Piperylen, Styrol, Chlorstyrol, Methoxystyrol, Inden und Indenderivaten, α-Methylstyrol, o-Methylstyrol, m-Methylstyrol und p-Methylstyrol, und p-tert-Butylstyrol enthält.

5. Mikroschichtverbund nach Anspruch 1, bei dem die elastomere Zusammensetzung halogenierte von C₄- bis C₇-Isoolefin abgeleitete Einheiten enthält.

6. Mikroschichtverbund nach Anspruch 1, bei dem die elastomere Zusammensetzung von Alkylstyrol abgeleitete Einheiten enthält.

7. Mikroschichtverbund nach Anspruch 1, bei dem die elastomere Zusammensetzung von einem Terpolymer abgeleitete Einheiten enthält.

8. Mikroschichtverbund nach Anspruch 1, bei dem die elastomere Zusammensetzung von einem Ethylen-Propylen-Kautschuk abgeleitete Einheiten enthält.

9. Mikroschichtverbund nach Anspruch 1, bei dem die elastomere Zusammensetzung Einheiten ausgewählt aus der Gruppe bestehend aus mindestens einem von Ethylidennorbornen, 1,4-Hexadien und Dicyclopentadien enthält.

10. Mikroschichtverbund nach Anspruch 1, bei dem die elastomere Zusammensetzung ferner Einheiten ausgewählt aus der Gruppe bestehend aus mindestens einem von Naturkautschuken, Polyisoprenkautschuk, Styrol-Butadien-Kautschuk (SBR), Polybutadienkautschuk, Isopren-Butadien-Kautschuk (IBR), Styrol-Isopren-Butadien-Kautschuk (SIBR), Ethylen-Propylen-Kautschuk, Ethylen-Propylen-Dien-Kautschuk (EPDM), maleiertem EPDM, Polysulfid, Nitrilkautschuk, Propylenoxidpolymeren, Poly(isobutylen-co-p-methylstyrol), halogeniertem Poly(isobutylen-co-p-methylstyrol), Poly(isobutylen-co-cyclopentadien), halogeniertem Poly-(isobutylen-co-cyclopentadien), Poly(isobutylen-co-isopren-co-p-methylstyrol), halogeniertem Poly(isobutylen-co-isopren-co-p-methylstyrol), Poly(isobutylen-co-isopren-co-styrol), halogeniertem Poly(isobutylen-co-isopren-co-styrol), Poly(isobutylen-co-isopren-co-α-methylstyrol), halogeniertem Poly(isobutylen-co-isopren-co-α-methylstyrol) und Mischungen davon enthält.

11. Mikroschichtverbund nach Anspruch 1, bei dem das thermoplastische Harz mit hoher Barrierewirkung ausgewählt ist aus der Gruppe bestehend aus mindestens einem von Polycaprolactam (Nylon-6), Polylauryllactam (Nylon-12), Polyhexamethylenadipamid (Nylon-6,6) Polyhexamethylenazelamid (Nylon-6,9), Polyhexamethylensebacamid (Nylon-6,10), Polyhexamethylenisophthalamid (Nylon-6, IP) und dem Kondensationsprodukt von 11-Aminoundecansäure (Nylon-11) sowie Mischungen davon.

12. Mikroschichtverbund nach Anspruch 1, bei dem die elastomere Zusammensetzung ein Verarbeitungshilfsmittel ausgewählt aus mindestens einem von paraffinischen Ölen, aromatischen Ölen, naphthenischen Ölen und Polybutenen enthält.

13. Mikroschichtverbund nach Anspruch 12, bei dem die elastomere Zusammensetzung 2 bis 20 phr des Verarbeitungsmittels enthält.

14. Mikroschichtverbund nach Anspruch 13, bei dem die elastomere Zusammensetzung 1 bis 15 phr des Verarbeitungsmittels enthält.

15. Mikroschichtverbund nach Anspruch 1, bei dem die elastomere Zusammensetzung einen Füllstoff ausgewählt aus der Gruppe bestehend aus mindestens einem von Ruß, modifiziertem Ruß, Silikaten, exfoliertem Ton, teilweise exfoliertem Ton, modifiziertem exfoliertem Ton, modifiziertem teilweise exfoliertem Ton und Mischungen davon enthält.

16. Mikroschichtverbund nach Anspruch 1, bei dem die elastomere Zusammensetzung ein Härtungsmittel ausgewählt aus der Gruppe bestehend aus mindestens einem von Schwefel, Verbindungen auf Schwefelbasis, Metalloxiden, Metalloxidkomplexen, Fettsäuren, Peroxiden, Diaminen und Mischungen davon enthält.

17. Mikroschichtverbund nach Anspruch 1, bei dem das thermoplastische Harz mit hoher Barrierewirkung ausgewählt ist aus der Gruppe bestehend aus mindestens einem von Poly(trans-1,4-cyclohexylen), Poly(trans-1,4-cyclohexylensuccinat), Poly(trans-1,4-cyclohexylenadipat), Poly(cis-1,4-cyclohexandimethylen) oxalat, Poly-(cis-1,4-cyclohexandimethylen)succinat, Polyethylenterephthalat, Polytetramethylenterephthalat und Polytetramethylenisophthalat sowie Mischungen davon.

18. Luftbarriere, die einen Mikroschichtverbund nach einem der vorhergehenden Ansprüche aufweist, wobei die elastomere Zusammensetzung und das thermoplastische Harz mit hoher Barrierewirkung in Mikroschichten coextrudiert sind, um den Mikroschichtverbund herzustellen.

19. Verfahren zur Herstellung eines Verbundgegenstands aus einem Mikroschichtverbund, bei dem in Stufen
eine elastomere Zusammensetzung, die von C₄- bis C₇-Isoolefin abgeleitete Einheiten enthält, und ein thermoplastisches Harz mit hoher Barrierewirkung ausgewählt aus der Gruppe bestehend aus mindestens einem von Polyester, Poly(vinylalkohol), Poly(vinylenchlorid) und Polyamid unter Bildung eines Gemisches gemischt werden,
das Gemisch schmelzverarbeitet wird und
das Gemisch in Mikroschichten coextrudiert wird, um den Verbundgegenstand zu bilden.

20. Verfahren nach Anspruch 19, bei dem das Gemisch ferner gehärtet wird.

21. Verfahren nach Anspruch 20, bei dem das Härten die Verwendung eines Härtungsmittels ausgewählt aus der Gruppe bestehend aus mindestens einem von Schwefel, Verbindungen auf Schwefelbasis, Metalloxiden, Metalloxidkomplexen, Fettsäuren, Peroxiden, Diaminen und Mischungen davon beinhaltet.

22. Verfahren nach Anspruch 19, bei dem das thermoplastische Harz mit hoher Barrierewirkung ausgewählt ist aus der Gruppe bestehend aus mindestens einem von Poly(trans-1,4-cyclohexylen), Poly(trans-1,4-cyclohexylensuccinat), Poly(trans-1,4-cyclohexylenadipat), Poly(cis-1,4-cyclohexandimethylen)oxalat, Poly-(cis-1,4-cyclohexandimethylen)succinat, Polyethylenterephthalat, Polytetramethylenterephthalat und Polytetramethylenisophthalat sowie Mischungen davon.

23. Reifen, der eine Luftbarriere aufweist, die einen Mikroschichtverbund gemäß einem der Ansprüche 1 bis 17 enthält.

## Revendications

1. Composite à microcouches comprenant :
(a) une composition élastomère comprenant des motifs dérivés d'une iso-oléfine en C₄ à C₇ ; et
(b) une résine thermoplastique haute barrière choisie parmi le groupe constitué d'au moins l'un parmi un polyester, un polyalcool vinylique, un polychlorure de vinylidène et un polyamide.

2. Composite à microcouches selon la revendication 1, dans lequel le composite à microcouches comprend au moins 1 600 couches.

3. Composite à microcouches selon la revendication 1, dans lequel le composite à microcouches comprend plusieurs couches, les couches présentant une épaisseur commençant à moins de 2 µ.

4. Composite à microcouches selon la revendication 1, dans lequel la composition élastomère comprend des motifs choisis parmi l'isobutylène, l'isobutène, le 2-méthyl-1-butène, le 3-méthyl-1-butène, le 2-méthyl-2-butène, le 1-butène, le 2-butène, l'éther méthylvinylique, l'indène, le vinyltriméthylsilane, l'hexène, le 4-méthyl-1-pentène, l'isoprène, le butadiène, le 2,3-diméthyl-1,3-butadiène, le myrcène, le 6,6-diméthylfulvène, l'hexadiène, le cyclopentadiène, le pipérylène, le styrène, le chlorostyrène, le méthoxystyrène, l'indène et des dérivés de l'indène, le α-méthylstyrène, le o-méthylstyrène, le m-méthylstyrène, le p-méthylstyrène et le p-tert-butylstyrène.

5. Composite à microcouches selon la revendication 1, dans lequel la composition élastomère comprend des motifs dérivés d'une iso-oléfine en C₄ à C₇ halogénée.

6. Composite à microcouches selon la revendication 1, dans lequel la composition élastomère comprend des motifs dérivés d'un alkylstyrène.

7. Composite à microcouches selon la revendication 1, dans lequel la composition élastomère comprend des motifs dérivés d'un terpolymère.

8. Composite à microcouches selon la revendication 1, dans lequel la composition élastomère comprend des motifs dérivés d'un caoutchouc d'éthylène-propylène.

9. Composite à microcouches selon la revendication 1, dans lequel la composition élastomère comprend des motifs choisis parmi le groupe constitué d'au moins l'un parmi l'éthylidène-norbornène, le 1,4-hexadiène et le dicyclopentadiène.

10. Composite à microcouches selon la revendication 1, dans lequel la composition élastomère comprend en outre les motifs choisis parmi le groupe constitué d'au moins l'un parmi des caoutchoucs naturels, un caoutchouc de polyisoprène, un caoutchouc de styrène-butadiène (SBR), un caoutchouc de poly-butadiène, un caoutchouc d'isoprène-butadiène (IBR), un caoutchouc de styrène-isoprène-butadiène (SIBR), un caoutchouc d'éthylène-propylène, un caoutchouc d'éthylène-propylène-diène (EPDM), un EPDM maléaté, un polysulfure, un caoutchouc de nitrile, des polymères d'oxyde de propylène, un poly(isobutylène-*co-p*-méthylstyrène), un poly(iso-butylène-*co-p*-méthylstyrène) halogéné, un poly-(isobutylène-co-cyclopentadiène), un poly(iso-butylène-*co*-cyclopentadiène) halogéné, un poly-(isobutylène-co-isoprène-co-p-méthylstyrène), un poly(isobutylène-co-isoprène-co-p-méthylstyrène) halogéné, un poly(isobutylène-co-isoprène-co-styrène), un poly(isobutylène-co-isoprène-co-styrène) halogéné, un poly(isobutylène-co-isoprène-co-α-méthylstyrène), un poly(isobutylène-co-isoprène-co-α-méthylstyrène) halogéné, et leurs mélanges.

11. Composite à microcouches selon la revendication 1, dans lequel la résine thermoplastique haute barrière est choisie parmi le groupe constitué d'au moins l'un parmi un polycaprolactame (nylon-6), un polylauryllactame (nylon-12), un polyhexaméthylène-adipamide (nylon-6, 6), un polyhexaméthylène-azélamide (nylon-6,9), un polyhexaméthylène-sébacamide (nylon-6,10), un polyhexaméthylène-isophtalamide (nylon-6, IP) et le produit de condensation de l'acide 11-amino-undécanoïque (nylon-11), et de leurs mélanges.

12. Composite à microcouches selon la revendication 1, dans lequel la composition élastomère comprend un auxiliaire de mise en oeuvre choisi parmi au moins l'un parmi des huiles paraffiniques, des huiles aromatiques, des huiles naphténiques et des polybutènes.

13. Composite à microcouches selon la revendication 12, dans lequel la composition élastomère comprend de 2 à 20 phr de l'auxiliaire de mise en oeuvre.

14. Composite à microcouches selon la revendication 13, dans lequel la composition élastomère comprend de 5 à 15 phr de l'auxiliaire de mise en oeuvre.

15. Composite à microcouches selon la revendication 1, dans lequel la composition élastomère comprend une charge choisie parmi le groupe constitué d'au moins l'un parmi le noir de carbone, le noir de carbone modifié, des silicates, une argile exfoliée, une argile partiellement exfoliée, une argile exfoliée modifiée, une argile partiellement exfoliée modifiée, et leurs mélanges.

16. Composite à microcouches selon la revendication 1, dans lequel la composition élastomère comprend un agent de durcissement choisi parmi le groupe constitué d'au moins l'un parmi le soufre, des composés à base de soufre, des oxydes métalliques, des complexes d'oxydes métalliques, des acides gras, des peroxydes, des diamines, et de leurs mélanges.

17. Composite à microcouches selon la revendication 1, dans lequel la résine thermoplastique haute barrière est choisie parmi le groupe constitué d'au moins l'un parmi un poly(trans-1,4-cyclohexylène), un poly(trans-1,4-cyclohexylène-succinate), un poly(trans-1,4-cyclohexylène-adipate), un poly(cis-1,4-cyclohexane-diméthylène)-oxalate, un poly(cis-1,4-cyclohexane-diméthylène)-succinate, un polyéthylène-téréphtalate, un polytétraméthylène-téréphtalate et un polytétraméthylène-isophtalate, et de leurs mélanges.

18. Barrière à l'air comprenant un composite à microcouches selon l'une quelconque des revendications précédentes, dans laquelle la composition élastomère et la résine thermoplastique haute barrière sont co-extrudées en microcouches en vue de produire le composite à microcouches.

19. Procédé de fabrication d'un article composite à partir d'un composite à microcouches comprenant les étapes consistant à :
mélanger une composition élastomère comprenant des motifs dérivés d'une iso-oléfine en C₄ à C₇ et une résine thermoplastique haute barrière choisie parmi le groupe constitué d'au moins l'un parmi un polyester, un polyalcool vinylique, un polychlorure de vinylidène et un polyamide, en vue de former un mélange ;
traiter le mélange à l'état fondu ; et
co-extruder le mélange en microcouches en vue de former l'article composite.

20. Procédé selon la revendication 19 comprenant, en outre, le durcissement du mélange.

21. Procédé selon la revendication 20, dans lequel le durcissement comprend l'application d'un agent de durcissement choisi parmi le groupe constitué d'au moins l'un parmi le soufre, des composés à base de soufre, des oxydes métalliques, des complexes d'oxydes métalliques, des acides gras, des peroxydes, des diamines, et de leurs mélanges.

22. Procédé selon la revendication 19, dans lequel la résine thermoplastique haute barrière est choisie parmi le groupe constitué d'au moins l'un parmi un poly(trans-1,4-cyclohexylène), un poly(trans-1,4-cyclohexylène-succinate), un poly(trans-1,4-cyclohexylène-adipate), un poly(cis-1,4-cyclohexane-diméthylène)-oxalate, un poly(cis-1,4-cyclohexane-diméthylène)-succinate, un poly-éthylène-téréphtalate, un polytétraméthylène-téréphtalate et un polytétraméthylène-isophtalate, et de leurs mélanges.

23. Pneu comprenant une barrière à l'air comprenant un composite à microcouches selon l'une quelconque des revendications 1 à 17.
